Europäisches Patentamt

European Patent Office

Office européen des brevets

(19)

(11) Veröffentlichungsnummer: **0 133 693**
**B1**

(12) # EUROPÄISCHE PATENTSCHRIFT

(45) Veröffentlichungstag der Patentschrift:
20.07.88

(51) Int. Cl.⁴: **G 01 N 21/05**

(21) Anmeldenummer: **84109214.1**

(22) Anmeldetag: **03.08.84**

(54) Küvette für Gasanalysengeräte.

(30) Priorität: **04.08.83 DE 3328171**

(43) Veröffentlichungstag der Anmeldung:
**06.03.85 Patentblatt 85/10**

(45) Bekanntmachung des Hinweises auf die Patenterteilung:
**20.07.88 Patentblatt 88/29**

(84) Benannte Vertragsstaaten:
**AT BE CH DE FR GB IT LI NL**

(56) Entgegenhaltungen:
**GB-A-2 072 375**
**US-A-3 788 751**
**US-A-3 795 450**
**US-A-4 201 915**

**SOVIET INVENTIONS ILLUSTRATED, Woche B43, 2.
Dezember 1981, Zusammenfassungsnr. L0967,503,
Derwent Publications Ltd., London, GB; & SU - A -
792 098 (LENINGRAD UNIV) 26.12.1978**

(73) Patentinhaber: **LEYBOLD AKTIENGESELLSCHAFT,
Bonner Str. 504, D-5000 Köln 51 (DE)**

(72) Erfinder: **Heimel, Helmut, Marienstrasse 4, D-6451
Ronneburg 1 (DE)**
Erfinder: **Randow, Albert, Paul- Gerhardt- Strasse
9, D-6454 Bruchköbel- Niederissigheim (DE)**
Erfinder: **Röss, Rudi, Dipl.- Phys., Waldseestrasse
31, D-6454 Bruchköbel (DE)**
Erfinder: **Wiegleb, Gerhard, Dipl.- Ing.,
Lortzingstrasse 4a, D-6457 Maintal 4 (DE)**

(74) Vertreter: **Zapfe, Hans, Dipl.- Ing., Seestrasse 2
Postfach 30 04 08, D-6054 Rodgau- 3 (DE)**

## Beschreibung

Die Erfindung betrifft eine Küvette für Gasanalysengeräte mit einem Gehäuse mit einer zylindrischen Bohrung, die durch eine axiale Trennwand in zwei Teilräume unterteilt ist, deren einer für das Meßgas und einen Meßlichtstrahl und deren anderer für ein Referenzmedium und einen Referenzlichtstrahl vorgesehen ist, sowie mit beiderseitigen Fenstern für den Durchtritt von Meß- und Referenzlichtstrahl.

Eine derartige Küvette ist durch die DE-A-3 010 516 bekannt, ihr Einsatz in einem Gasanalysengerät ist in der DE-A-2 720 636 beschrieben.

Die bekannte Küvette ist zwar für Betriebstemperaturen bis zu etwa 350° C geeignet, nicht aber für die Analyse von korrosiven Gasen bei hohen Drücken (z. B. 40 bar) und in Bezug auf diese Drücke relativ hoher Temperatur (z. B. 150° C).

Bei der bekannten Küvette befindet sich im einen Teilraum ausschließlich ein Referenzgas und im anderen Teilraum ausschließlich das Meßgas. Beide Teilräume sind zum Zwecke eines Gasaustauschs mit je zwei Anschlußleitungen versehen, so daß die bekannte Küvette insgesamt vier Anschlüsse benötigt. Durch das Meßgas werden unvermeidbar Verunreinigungen in den einen Teilraum eingeschleppt, die dort teilweise niederschlagen und das Transmissionsverhalten der Fenster im Laufe der Zeit verändern. Hierdurch wird ein verändertes Absorptionsverhalten des Meßgases vorgetäuscht, das zu falschen Meßergebnissen führen kann. Durch einen Abgleich des Meßgeräts vor der Messung kann eine Kompensation nur sehr bedingt durchgeführt werden.

Der Erfindung liegt nun die Aufgabe zugrunde, eine Küvette der eingangs beschriebenen Art dahingehend zu verbessern, daß sie auch bei hohen Drücken und für die Analyse von korrosiven Gasen bei höheren Temperaturen eingesetzt werden kann.

Die Lösung der gestellten Aufgabe erfolgt bei der eingangs beschriebenen Küvette erfindungsgemäß dadurch, daß

a) in der zylindrischen Bohrung ein das Referenzmedium bildender halbzylindrischer Körper aus einem glasklar durchsichtigen Werkstoff angeordnet ist,

b) an beiden Enden der zylindrischen Bohrung Ringschulterflächen für die Auflage je eines Dichtungsringes und je eines zylindrischen Fensters angeordnet sind, und daß

c) die Fenster durch ringförmige Druckflansche über Dichtungsringe festgelegt sind.

Durch das Merkmal a) wird zunächst einmal erreicht, daß in die zylindrische Bohrung keine besondere planparallele Trennwand mehr abgedichtet eingesetzt werden muß, die gegenüber einer einseitigen hohen Druckbeaufschlagung entsprechend biegesteif ausgeführt sein müßte, wobei im Hinblick auf die Abdichtung auch noch eine besondere Sorgfalt bei der Herstellung angewandt werden müßte. Die Trennwand wird vielmehr durch die in der Achse des Halbzylinders liegende ebene Begrenzungsfläche gebildet, so daß der gesamte Halbzylinder dem Betriebsdruck ausgesetzt ist, und zwar allseitig, so daß weder eine besondere Festigkeit noch irgendeine Abdichtung erforderlich sind. Es ist lediglich erforderlich, den Halbzylinder in der zylindrischen Bohrung entsprechend festzulegen, was durch einfache Halteelemente aus Blech geschehen kann. Es ist auch nicht mehr erforderlich, im Referenzmedium Druckgleichheit mit dem Meßgas herzustellen, ein Vorgang, der bei starken Druckschwankungen ohnehin schwierig durchzuführen wäre. Als Werkstoff für den halbzylindrischen Körper kommt je nach Anwendungszweck bevorzugt $SiO_2$, $Al_2O_3$, $CaF_2$, $BaF_2$, LiF, o.ä. in Frage.

Durch das Merkmal b) wird erreicht, daß im Gegensatz zu den Fenstern nach der DE-A-3 010 516 nicht mehr halbkreisförmige Fenster verwendet werden müssen, sondern kreisförmige bzw. zylindrische Fenster, die gegenüber hohen Innendrücken wesentlich leichter und temperaturbeständiger abzudichten sind.

Durch das Merkmal c) wird nicht nur der Zusammenbau, sondern auch die Wartung und gegebenenfalls eine Reparatur wesentlich erleichtert; nach dem Abnehmen mindestens eines der beiden Druckflansche ist die zylindrische Bohrung gut zugänglich, und auch das feste Referenzmedium kann auf einfache Weise entnommen und gegebenenfalls ebenso wie die Fenster gereinigt werden. Die Druckflansche ermöglichen eine gleichförmige Abstützung der Fenster gegenüber den relativ hohen Innendrücken, so daß eine hohe Betriebssicherheit gegeben ist. Außerdem lassen sich Kräfte, die von unterschiedlichen thermischen Ausdehnungskoeffizienten herrühren, auf diese Weise leicht beherrschen.

Es ist dabei gemäß der weiteren Erfindung besonders vorteilhaft, wenn zwischen den halbkreisförmigen Endflächen des Körpers (Referenzmedium) und den kreisförmigen Fenstern je ein von planparallelen Wänden begrenzter Spalt für den Eintritt des Meßgases vorhanden ist.

Es wurde bereits weiter oben ausgeführt, daß das (korrosive) Meßgas Verunreinigungen mitschleppt, die in der Küvette niederschlagen. Die Ablagerung erfolgt naturgemäß sowohl auf den Fenstern als auch auf den halbkreisförmigen Endflächen des Körpers (Referenzmedium). Auf diese Weise findet die unvermeidbare Verschmutzung nicht nur auf der Meßseite, sondern auch auf der Referenzseite statt. Nun existieren auf der Referenzseite beiderseits der beiden Spalte insgesamt vier Ablagerungsflächen, während auf der Meßseite nur zwei Ablagerungsflächen vorhanden sind. Die insgesamt vier Ablagerungsflächen auf der Referenzseite tragen aber der Tatsache Rechnung, daß die beiden Spalte für das Meßgas weniger gut zugänglich sind, so daß sich eine Ablagerung dort langsamer vollzieht. Man hat es durch entsprechende Wahl der Spaltbreite in der Hand, die Strömungsverhältnisse auf der Meß- und auf der Referenzseite entsprechend zu berücksichtigen, so daß sich die Verschmutzungsverhältnisse auf beiden Seiten in etwa die Waage halten. Dadurch läßt sich die Betriebsdauer der Küvette bis zum nächsten Reinigungsvorgang wesentlich verlängern.

Es ist dabei gemäß der weiteren Erfindung wiederum besonders vorteilhaft, wenn die Druckflansche mit Absaugkanälen versehen sind. Sollte durch etwaige Undichtigkeiten das korrosive Meßgas aus der Küvette austreten, so kann es nicht in die zugehörige Meßapparatur gelangen und dort schwerwiegende Beschädigungen verursachen, sondern es wird über die Absaugkanäle abgesaugt und in den Kreislauf des Meßgases zurückgeführt. Diese Maßnahme ist besonders dann wichtig, wenn es sich bei den Meßgasen um toxische Gase handelt, die unter keinen Umständen in die Atmosphäre gelangen dürfen.

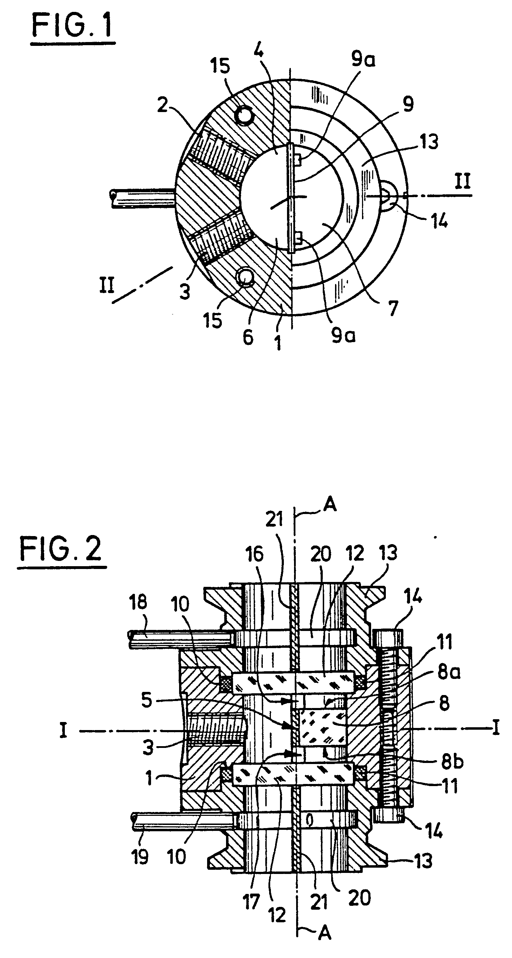

Ein Ausführungsbeispiel des Erfindungsgegenstandes wird nachfolgend anhand der Figuren 1 und 2 näher erläutert.

Es zeigen:

Figur 1    einen Radialschnitt durch eine Küvette entlang der Linie I-I in Figur 2 und
Figur 2    einen Axialschnitt durch die Küvette nach Figur 1 entlang der Linie II-II.

In Figur 1 ist ein Gehäuse 1 mit einer radialen Einlaßbohrung 2 und einer radialen Auslaßbohrung 3 dargestellt. Die beiden Bohrungen kommunizieren mit einer zentralen zylindrischen Bohrung 4, deren Längsachse A-A mit der Gehäuseachse identisch ist.

Die Bohrung 4 ist durch eine axiale Trennwand 5 in zwei Teilräume 6 und 7 unterteilt, von denen der Teilraum 6 für das Meßgas und den Meßlichtstrahl und von denen der Teilraum 7 für das Referenzmedium und einen Referenzlichtstrahl vorgesehen ist. Das Referenzmedium wird dabei durch einen etwa halbzylindrischen Körper 8 aus $SiO_2$, $Al_2O_3$, $CaF_2$, $BaF_2$, LiF, oder dergleichen gebildet, dessen zur Achse A-A parallele Fläche die Trennwand 5 bildet. Die Trennwand 5 ist dabei derart zu den Ein- und Auslaßbohrungen 2 bzw. 3 ausgerichtet, daß eine siegelsymmetrische Lage gemäß Figur 1 gegeben ist. Der Körper 8 besitzt zwei etwa halbkreisförmige Endflächen 8a und 8b, die planparallel zueinander verlaufen. Der Körper 8 wird in der Bohrung 4 durch ein etwa diametral verlaufendes Halteblech 9 gehalten, welches die axiale Lage des Körpers 8 durch Zungen 9a festlegt, von denen je zwei über und unter dem Körper 8 angeordnet sind.

An den beiden Enden des Gehäuses 1 befinden sich Ringschulterflächen 10 für die Aufnahme je eines Dichtungsrings 11 und je eines zylindrischen Fensters 12 oberhalb bzw. unterhalb des Körpers 8. Die Fenster 12 sind in siegelsymmetrischer Anordnung durch Druckflansche 13 über Dichtungsringe 11 festgelegt. Hierbei werden die Dichtungsringe 11 durch entsprechende Formgebung der Ringschulterflächen einerseits und der Druckflansche andererseits in axialer Richtung zusammengepreßt, so daß sie sich in radialer Richtung ausdehnen und am Gehäuse 1 einerseits sowie an den Zylinderflächen der Fenster 12 andererseits zur gasdichten Anlage kommen. Die Fenster selbst werden nicht axial auf Druck beansprucht, da die Druckflansche bereits am Gehäuse zur Anlage kommen, wenn die Fenster noch ein geringes axiales Spiel von beispielsweise 0,2 mm haben. Durch die gewählte Anordnung haben die Fenster 12 einen präzisen Sitz, der von gegebenenfalls eintretenden Alterungseffekten der Dichtungsringe unbeeinflußt ist. Die Druckflansche 13 sind mit dem Gehäuse 1 durch drei auf den Umfang verteilte Schrauben 14 verspannt, von denen in Figur 1 auch noch die Schraubenbohrungen 15 zu sehen sind.

Figur 2 ist noch zu entnehmen, daß sich zwischen den halbkreisförmigen Endflächen 8a und 8b des Körpers 8 und den kreisförmigen Fenstern 12 je ein von planparallelen Wänden begrenzter Spalt 16 bzw. 17 befindet, in die das durch die Bohrungen 2 und 3 zirkulierende Meßgas eintreten kann.

Figur 2 ist weiterhin noch zu entnehmen, daß die Druckflansche 13 mit Absaugkanälen 18 und 19 versehen sind, durch die etwa an den Fenstern austretende Gase abgesaugt werden können. Zu diesem Zweck sind in die zylindrischen Innenflächen der Druckflansche 13 Nuten 20 eingestochen, über die die betreffenden Gase abgesaugt werden. In den zylindrischen Bohrungen der Druckflansche 13 befinden sich noch äußere Trennwände 21, die mit der Trennwand 5 des Körpers 8 fluchten. Auf diese Weise wird eine optische Trennung von Meßlichtstrahl und Referenzlicht strahl auf der gesamten Länge der Küvette gewährleistet.

**Patentansprüche**

1. Küvette für Gasanalysengeräte mit einem Gehäuse mit einer zylindrischen Bohrung (4), die durch eine axiale Trennwand (5) in zwei Teilräume (6, 7) unterteilt ist, deren einer für das Meßgas und einen Meßlichtstrahl und deren anderer für ein Referenzmedium und einen Referenzlichtstrahl vorgesehen ist, sowie mit an beiden Enden der zylindrischen Bohrung (4) angeordneten Fenstern (12) für den Durchtritt von Meß- und Referenzlichtstrahl,
dadurch gekennzeichnet, daß

a) in der zylindrischen Bohrung (4) ein das Referenzmedium bildender halbzylindrischer Körper (8) aus einem glasklar durchsichtigen Werkstoff angeordnet ist,

b) an beiden Enden der zylindrischen Bohrung (4) Ringschulterflächen (10) für die Auflage je eines Dichtungsrings (11) und je eines zylindrischen Fensters (12) angeordnet sind und daß

c) die Fenster (12) durch ringförmige Druckflansche (13) über Dichtungsringe (11) festgelegt sind.

2. Küvette nach Anspruch 1,
dadurch gekennzeichnet,
daß zwischen den halbkreisförmigen Endflächen (8a, 8b) des Körpers (8) und den kreisförmigen Fenstern (12) je ein von planparallelen Wänden begrenzter Spalt (16/17) für einen Eintritt des Meßgases vorhanden ist.

3. Küvette nach Anspruch 1,
dadurch gekennzeichnet, daß die Druckflansche (13) mit Absaugkanälen (18, 19) versehen sind.

**Claims**

1. A cuvette for gas analyzing apparatuses comprising a housing with a cylindrical bore (4), which bore is divided by an axial partition (5) into two chamber parts (6, 7), one of which is provided for the gas to be measured and a measuring light ray and the other of which is provided for a reference medium and a reference light ray, and comprising windows (12) arranged at both ends of the cylindrical bore (4) for the passage of the measuring and reference light rays, characterized in that

a) in the cylindrical bore (4) there is arranged a semi-cylindrical body (8) forming the reference medium and made of a transparent material clear as glass,

b) at both ends of the cylindrical bore (4) there are arranged annular shoulder surfaces (10) each for supporting a sealing ring (11) and a cylindrical window (12), and in that

c) the windows (12) are secured by annular pressure flanges (13) by means of sealing rings (11).

2. A cuvette according to claim 1, characterized in that between each of the semi-circular end faces (8a, 8b) of the body (8) and the circular windows (12) there is located a gap (16/17) defined by plane-parallel walls for entry of the gas to be measured.

3. A cuvette according to claim 1, characterized in that the pressure flanges (13) are provided with extraction channels (18, 19).

**Revendications**

1. Cuvette pour appareils d'analyse de gaz, possédant un corps avec un alésage cylindrique (4) partagé par une cloison axiale (5) en deux compartiments (6, 7) dont l'un est prévu pour le gaz à analyser et un faisceau lumineux de mesure et l'autre pour un milieu de référence et un faisceau lumineux de référence, ainsi que des fenêtres (12) disposées aux deux extrémités de l'alésage (4) pour le passage des faisceaux de mesure et de référence,
caractérisée en ce que

a) un solide hémicylindrique (8) un matériau transparent et incolore, formant le milieu de référence, est placé dans l'alésage (4),

b) des épaulements annulaires (10) sont prévus aux deux extrémités de l'alésage (4) pour l'appui, sur chaque épaulement, d'un joint annulaire d'étanchéité (11) et d'une fenêtre cylindrique (12) et

c) les fenêtres (12) sont bloquées par des brides annulaires de compression (13) agissant par l'intermédiaire de joints annulaires d'étanchéité (11).

2. Cuvette selon la revendication 1,
caractérisée en ce
qu'une fente (16/17) délimitée par des parois planes et parallèles est prévue pour une entrée du gaz à analyser entre chacune des faces semi-circulaires d'extrémité (8a, 8b) du solide (8) et une fenêtre circulaire (12).

3. Cuvette selon la revendication 1,
caractérisée en ce
que les brides de compression (13) sont pourvues de canaux d'aspiration (18, 19).

## FIG.1

## FIG.2